# EUROPEAN PATENT SPECIFICATION

(11) **EP 3 202 935 B1**
(45) Date of publication and mention of the grant of the patent: **01.05.2019**
(21) Application number: 15845945.3
(22) Date of filing: 18.09.2015
(51) Int. Cl.: C22C 37/04, F02F 3/00, F16J 1/01, C21D 5/00, C22C 37/10, C22C 37/06

(54) **NODULAR GRAPHITE CAST IRON FOR PISTONS, ONE-PIECE PISTON, AND MARINE ENGINE**
GUSSEISEN MIT KUGELGRAPHIT FÜR KOLBEN, EINTEILIGE KOLBEN UND SCHIFFSMOTOR
FONTE À GRAPHITE NODULAIRE POUR PISTONS, PISTON MONOBLOC ET MOTEUR MARIN

(30) Priority: 29.09.2014 JP 2014199271
(43) Date of publication of application: 09.08.2017
(73) Proprietor: Yanmar Co., Ltd., Osaka-shi, Osaka 530-8311 (JP)
(72) Inventor: ANJIKI, Takuya, Osaka-shi Osaka 530-8311 (JP); OKA, Masanori, Osaka-shi Osaka 530-8311 (JP); KOTANI, Tomokatsu, Matsue-shi Shimane 690-0025 (JP); SATO, Risa, Matsue-shi Shimane 690-0025 (JP)
(74) Representative: Hoffmann Eitle
(86) International application number: PCT/JP2015/004802
(87) International publication number: WO 2016/051725

(56) References cited:
- EP-A1- 1 724 370
- CN-A- 103 602 883
- DE-U1- 20 306 253
- JP-A- H0 987 797
- JP-A- H03 104 841
- JP-A- 2000 045 011
- JP-A- 2004 099 923
- JP-A- 2011 236 493

## Description

### FIELD

The present invention relates to a nodular graphite cast iron for pistons, a one-piece piston, and a marine engine.

### BACKGROUND

Conventionally, as pistons for small-sized marine engines of a pleasure boat, a steamship, and the like and pistons for marine engines of an auxiliary machine, a main engine, and the like of a tankship, an assembly-type piston having two components of a crown and a skirt and a one-piece piston formed integrally entirely have been used. In the assembly-type piston, the crown forming a head portion is formed of low-alloy steel, and the skirt is formed of cast iron. On the other hand, the one-piece piston is formed of nodular graphite cast iron.

Here, the one-piece piston achieves a manufacturing process reduction as compared to the assembly-type piston having two components. Further, the one-piece piston formed of the nodular graphite cast iron is low in manufacturing cost as compared to the assembly-type piston using the low-alloy steel. The one-piece piston has such advantages.

The conventional nodular graphite cast iron has been used as a material forming the one-piece piston without causing problems related to heat resistance and a life under an operating condition of a conventional marine engine.

Response to emission control and high efficiency of the marine engine have been underway recently. Thereby, the marine engine has been required to achieve high power. Therefore, a heat load to work on the piston constituting the engine increases. That is, the heat load to work on the nodular graphite cast iron forming the one-piece piston increases. Under this increase in heat load, the engine operates and halts repeatedly, and thereby, thermal fatigue on the one-piece piston, namely on the nodular graphite cast iron increases.

### PRIOR ART DOCUMENT

### PATENT DOCUMENT

[Patent Document 1] JP-A 08-260161
[Patent Document 2] JP-A. 2003-083159
[Patent Document 3] EP1 724 370 A1
[Patent Document 4] JP-A-2004 099923

Patent document 3 discloses composition for heat resisting cast iron for pistons, Patent document 4 discloses compositions for high-strength ductile cast iron for motor vehicle and machine components.

### SUMMARY

### PROBLEMS TO BE SOLVED BY THE INVENTION

Due to the increase in thermal fatigue caused by the above-described high power, a crack possibly may occur in the one-piece piston. That is, the conventional nodular graphite cast iron forming the one-piece piston has difficulty in obtaining sufficient heat resistance or a sufficient life under an operating condition of the engine whose high power is achieved.

An object to be solved by the present invention is to provide a nodular graphite cast iron for pistons that is excellent in heat resistance and life while maintaining strength and hardness, a one-piece piston formed of this nodular graphite cast iron, and a marine engine including this piston.

### MEANS OF SOLVING THE PROBLEMS

A nodular graphite cast iron for pistons according to an embodiment contains, in mass%, C: 2.7 to 4.3%, Si: 2.4 to 3.5%, Mn: 0.3 to 0.8%, Mg: 0.02 to 0.10%, Cu: 0.3 to 0.5%, Cr: 0.05 to 0.90%, and Mo: 0.05 to 1.00% with the balance being composed of Fe and inevitable impurities. Then, the C content and the Si content fall within a composition range defined by a line sequentially joining respective points of point A (2.7%, 3.5%), point B (3.2%, 2.0%), point C (4.3%, 2.0%), and point D (3.8%, 3.5%) indicated by (the C content and the Si content) in a graph illustrating the relation between the C content and the Si content. The nodular graphite cast iron for pistons is a pearlite-based nodular graphite cast iron that has a ratio of a pearlite structure greater than 50% in a base structure of the nodular graphite cast iron excluding a graphite structure, and the graphite spheroidizing ratio in the nodular graphite cast iron is 80% or more, wherein the spheroidizing ratio is calculated in conformity with JIS G5502.

### EFFECT OF THE INVENTION

In the present invention, it is possible to provide a nodular graphite cast iron for pistons that is excellent in heat resistance and life while maintaining strength and hardness, a one-piece piston formed of this nodular graphite cast iron, and a marine engine including this piston.

### BRIEF DESCRIPTION OF THE DRAWINGS

FIG. 1 is a graph illustrating the relation between the C content and the Si content.
FIG. 2 is a side view illustrating a one-piece piston fabricated of a nodular graphite cast iron according to an embodiment.
FIG. 3 is a view illustrating a constitution of a diesel engine including the one-piece piston according to an embodiment.
FIG. 4 is a side view of a ship including a marine engine according to an embodiment.

### DETAILED DESCRIPTION

Hereinafter, there will be explained embodiments of the present invention.

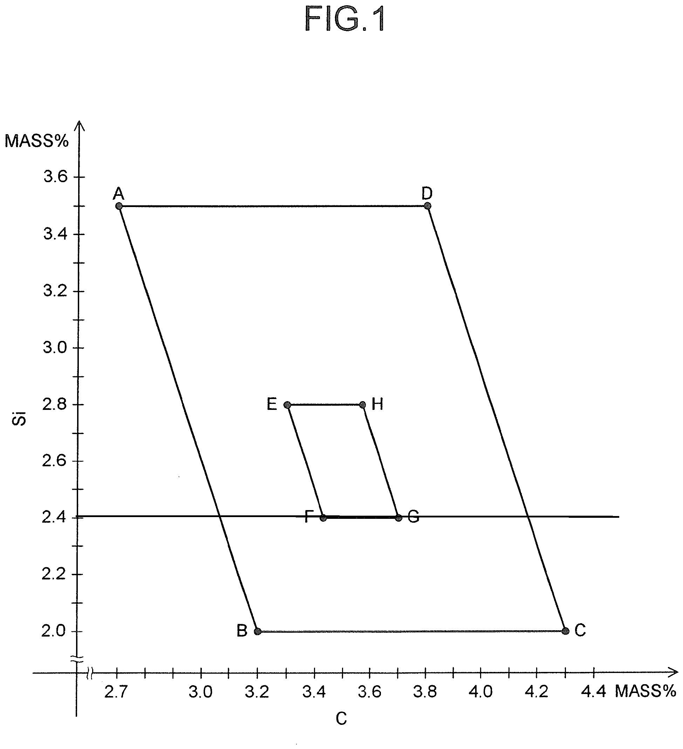

In the following explanation, % expressing a component of a composition is set to mass% unless otherwise stated. FIG. 1 is a graph illustrating the relation between the C content and the Si content.

A nodular graphite cast iron for pistons according to an embodiment (to be referred to as a nodular graphite cast iron hereinafter) contains C: 2.7 to 4.3%, Si: 2.4 to 3.5%, Mn: 0.3 to 0.8%, Mg: 0.02 to 0.10%, Cu: 0.3 to 0.5%, Cr: 0.05 to 0.90%, and Mo: 0.05 to 1.00% with the balance being composed of Fe and inevitable impurities.

Further, the C content and the Si content in the nodular graphite cast iron according to the embodiment fall within a composition range defined by a line sequentially joining respective points of point A (2.7%, 3.5%), point B (3.2%, 2.0%), point C (4.3%, 2.0%), and point D (3.8%, 3.5%) indicated by (the C content and the Si content) in FIG. 1. Incidentally, the C content and the Si content also include the line sequentially joining the points. A carbon equivalent CE (CE = C + 1/3 × Si) in this defined range is 3.87 to 4.97.

Here, as the inevitable impurities of the nodular graphite cast iron according to the embodiment, for example, S, P, and so on can be cited. Among these inevitable impurities, at least S is preferably suppressed to 0.05% or less and P is preferably suppressed to 0.1% or less.

The nodular graphite cast iron according to the embodiment includes nodular graphite crystals in a base structure. A graphite spheroidizing ratio in this nodular graphite cast iron is 80% or more. This spheroidizing ratio is calculated in conformity with JIS G5502. Incidentally, a cast iron having a graphite spheroidizing ratio of 80% or more is referred to as a nodular graphite cast iron in general.

In the nodular graphite cast iron according to the embodiment, the ratio of carbide in the base structure excluding a graphite structure is preferred to be 1.6% or less. Incidentally, this ratio of carbide is the average ratio of carbide to be described below.

The ratio of carbide is calculated by the following method, for example. A structural cross section of the nodular graphite cast iron is corroded by a nital corrosive liquid. Then, the structural cross section is observed by a microscope. On this occasion, for example, five visual fields are observed with the magnification set to 100 times. Image processing of each of the visual fields is performed, from which the total area occupied by the carbide and the total area occupied by the graphite structure are each calculated.

Then, the ratio of the area occupied by the carbide to the visual field area excluding the graphite structure is obtained. That is, the ratio of the carbide is calculated by dividing the area occupied by the carbide by the visual field area excluding the graphite structure. The ratios of the carbides calculated based on the respective visual fields are arithmetically averaged to obtain the averaged ratio of the carbide.

The carbide in the base reduces toughness. Therefore, setting the ratio of the carbide to 1.6% or less suppresses the reduction in toughness. Incidentally, the ratio of the carbide is preferred to be lower also in this range.

The nodular graphite cast iron according to the embodiment is a pearlite-based (pearlite-mainly-based) nodular graphite cast iron. The base structure of the nodular graphite cast iron according to the embodiment is composed of a pearlite structure, a ferrite structure, a graphite structure, and a carbide. Here, the pearlite-based (pearlite-mainly-based) nodular graphite cast iron refers to as a nodular graphite cast iron that has a ratio of a pearlite structure greater than 50% in a base structure of the nodular graphite cast iron excluding a graphite structure.

In the nodular graphite cast iron according to the embodiment, the ratio of the pearlite structure is preferred to be 60 to 100%. The reason why this range is preferred is because it is possible to achieve both toughness and strength. The further preferred ratio of the pearlite structure is 90 to 100%. Incidentally, this ratio of the pearlite structure is the averaged ratio of the pearlite structure to be described below.

The ratio of the pearlite structure is calculated by the following method, for example. A structural cross section of the nodular graphite cast iron is corroded by a nital corrosive liquid. Then, the structural cross section is observed by a microscope. On this occasion, for example, five visual fields are observed with the magnification set to 100 times. Image processing of each of the visual fields is performed, from which the total area occupied by the pearlite structure and the total area occupied by the graphite structure are each calculated.

Then, the ratio of the area occupied by the pearlite structure to the visual field area excluding the graphite structure is obtained. That is, the ratio of the pearlite structure is calculated by dividing the area occupied by the pearlite structure by the visual field area excluding the graphite structure. The ratios of the pearlite structures calculated based on the respective visual fields are arithmetically averaged to obtain the averaged ratio of the pearlite structure.

The pearlite structure in the base improves strength (tensile strength). Therefore, the nodular graphite cast iron according to the embodiment is set to the pearlite-based nodular graphite cast iron, thereby obtaining excellent strength (tensile strength).

The nodular graphite cast iron according to the embodiment is suitable as a material forming a piston of a marine engine, for example. As the marine engine, for example, an engine having a bore diameter (cylinder diameter) of 150 mm to 350 mm or so can be cited. Further, as the marine engine, an engine having an output of 500PS to 4500PS can be cited. That is, the nodular graphite cast iron according to the embodiment can be applied as a material forming pistons of small to intermediate-sized marine engines. The temperature of a piston becomes, for example, 500°C or so when such a marine engine operates.

Next, there will be explained reasons for limiting the respective composition ranges in the above-described nodular graphite cast iron according to the embodiment.

### (1) C (carbon)

C is an element necessary for crystallizing nodular graphite. When the content ratio of C is 2.7% or more, nodular graphite having a spheroidizing ratio of 80% or more crystallizes. On the other hand, when the content ratio of C is 4.3% or less, significant crystallization of graphite is suppressed and crystallization of nodular graphite having a spheroidizing ratio of 80% or more is maintained. Further, for maintaining the spheroidizing ratio of 80% or more, the content ratio of C is equal to or more than a line AB joining point A (2.7%, 3.5%) and point B (3.2%, 2.0%) and equal to less than a line CD joining point C (4.3%, 2.0%) and point D (3.8%, 3.5%) in FIG. 1 illustrating the relation between the C content and the Si content. By setting the content ratio of C to the line AB or more, deterioration of shrinkage characteristics is suppressed. On the other hand, by setting the content ratio of C to the line CD or less, occurrences of a carbon dross defect and floating graphite are suppressed.

Here, the content ratio of C is more preferred to be equal to or more than a line EF joining point E (3.3%, 2.8%) and point F (3.43%, 2.4%) and equal to or less than a line GH joining point G (3.7%, 2.4%) and point H (3.57%, 2.8%) in FIG. 1 illustrating the relation between the C content and the Si content.

### (2) Si (silicon)

Si is an element necessary for crystallizing nodular graphite. When the content ratio of Si is 2.0% or more, nodular graphite having a spheroidizing ratio of 80% or more crystallizes. Further, when the content ratio of Si is 2.0% or more, deterioration of shrinkage characteristics is suppressed. On the other hand, when the content ratio of Si is 3.5% or less, crystallization of nodular graphite having a spheroidizing ratio of 80% or more is maintained without a reduction in strength. Further, when the content ratio of Si is 3.5% or less, occurrences of a dross defect and floating graphite are suppressed. Therefore, the content ratio of Si is set to 2.4 to 3.5%, The more preferred content ratio of Si is 2.4 to 2.8%.

With the above-described composition ranges of C and Si, the C content and the Si content in the nodular graphite cast iron more preferably fall within a composition range defined by a line sequentially joining respective points of point E (3.3%, 2.8%), point F (3.43%, 2.4%), point G (3.7%, 2.4%), and point H (3.57%, 2.8%) indicated by (the C content and the Si content) in FIG. 1. The carbon equivalent CE in this range is 4.23 to 4.50.

### (3) Mn (manganese)

Mn is an element having a function of making graphite fine and strengthening pearlite being the base structure. These effects are exhibited when the content ratio of Mn is 0.3% or more. On the other hand, when the content ratio of Mn is 0.8% or less, deteriorations of elongation and brittleness are prevented and an increase in shrinkage is suppressed. Therefore, the content ratio of Mn is set to 0.3 to 0.8%. The more preferred content ratio of Mn is 0.3 to 0.5%.

### (4) Mg (magnesium)

Mg is an element necessary for obtaining nodular graphite. When the content ratio of Mg is 0.02% or more, nodular graphite having a spheroidizing ratio of 80% or more is obtained. On the other hand, when the content ratio of Mg is 0.1% or less, a shrinkage cavity, a dross defect, inverse chill, material setting, and a gas defect are suppressed. Therefore, the content ratio of Mg is set to 0.02 to 0.10%. The more preferred content ratio of Mg is 0.02 to 0.05%.

### (5) Cu (copper)

Cu suppresses carbides when adding a white pig iron forming element such as Cr. When the content ratio of Cu is 0.3% or more, this effect can be obtained. On the other hand, when the content ratio of Cu is 1.0% or less, the spheroidizing ratio of 80% or more is maintained. Therefore, the content ratio of Cu is set to 0.3 to 0.5%.

### (6) Cr (chromium)

Cr improves heat resistance and hardness. When the content ratio of Cr is 0.05% or more, these effects can be obtained. On the other hand, when the content ratio of Cr is 0.90% or less, excessive formation of carbide that reduces toughness is suppressed while maintaining appropriate hardness. Therefore, the content ratio of Cr is set to 0.05 to 0.90%. The more preferred content ratio of Cr is 0.2 to 0.4%.

### (7) Mo (molybdenum)

Mo improves heat resistance and hardness, similarly to Cr. When the content ratio of Mo is 0.05% or more, these effects can be obtained. On the other hand, when the content ratio of Mo is 1.00% or less, excessive formation of carbide that reduces toughness is suppressed while maintaining appropriate hardness. Therefore, the content ratio of Mo is set to 0.05 to 1.00%. The more preferred content ratio of Mo is 0.3 to 0.5%.

### (8) S (sulfur) and P (phosphorus)

S and P are classified as inevitable impurities in the nodular graphite cast iron according to the embodiment. A remaining content ratio of the inevitable impurities is preferably set to be close to 0% as much as possible. Further, among the inevitable impurities, at least S is preferably suppressed to 0.05 or less, and P is preferably suppressed to 0.1 or less.

S has a large affinity for Mg or the like, and consumes Mg of a spheroidizing agent. Further, S forms MgS to impair quality of a cast metal. Therefore, the remaining content ratio of S is set to 0.5% or less, and preferably set to be close to 0% as much as possible.

P promotes precipitation (crystallization) of steadite at a grain boundary of the base. Thereby, embrittlement progresses. Therefore, the remaining content ratio of P is set to 0.1% or less, and preferably set to be close to 0% as much as possible.

Next, there will be explained fabricating methods of the nodular graphite cast iron according to the embodiment and a one-piece piston manufactured by using this nodular graphite cast iron.

The nodular graphite cast iron according to the embodiment and the one-piece piston are fabricated as follows, for example. A molten metal for forming the nodular graphite cast iron is maintained to a temperature of 1480 to 1550°C, for example. The molten metal is formed by an electric furnace or the like, for example.

Spheroidizing is performed on this molten metal. Here, the method of spheroidizing is not limited in particular, and is a method that is conducted widely in general when fabricating the nodular graphite cast iron. Incidentally, as the spheroidizing agent, a Mg alloy, an Fe-Si-Mg alloy, or the like is used. The temperature of spheroidizing is set to 1480 to 1550°C by performing back calculation from a casting temperature into a product.

Here, desulfurization and dephosphorization may be performed on the molten metal before spheroidizing so as to make the S content and the P content in the molten metal become 0.05% or less and 0.1% or less respectively.

After the spheroidizing, the molten metal is poured into a mold formed of a sand mold. Here, when the molten metal is transferred to a ladle in order to pour it into the mold, an inoculant is added to the molten metal to perform inoculation thereon. The inoculation is performed at an inoculation temperature of 1380 to 1450°C, for example, by performing back calculation from a pouring temperature. When the pouring temperature is high, a shrinkage defect is likely to occur, and when the pouring temperature is low, a gas defect and misrun are likely to occur, and thus the pouring temperature is set to 1330 to 1410°C, for example. Incidentally, these temperatures are measured by an immersion thermometer, for example. Here, when the one-piece piston is formed, the mold is formed into a one-piece piston shape.

The poured metal in the mold is naturally cooled down to, for example, a temperature of 350°C or less at a cooling site.

After the cooling, a flask is removed, and a cast metal is taken out from the mold. Sand attached to the cast metal is removed by shot peening or the like, for example. Further, parts such as a runner and a feeding head other than component parts are cut off by plasma cutting or the like, for example.

Then, the cast metal is heat-treated. As the heat treatment, normalizing and annealing are performed.

The normalizing is performed in order to improve strength, for example. The normalizing is performed for two to three hours at a temperature of 870 to 940°C, for example. That is, the normalizing is performed for two to three hours after the temperature of the cast metal reaches 870 to 940°C. The heating rate until reaching this temperature is preferred to be 250 to 350°C/h.

In the meantime, cooling is preferably performed down to room temperature at a cooling rate of 500 to 1000°C/h, for example. Here, the above-described temperature is based on the temperature in the furnace, for example.

The reason why the temperature of normalizing is set to the above-described range is to suppress a reduction in toughness caused by coarsening of crystal grains.

Incidentally, the normalizing is performed when a tensile strength of 700 MPa or more, for example is necessary in the nodular graphite cast iron and the one-piece piston. That is, the heat treatment includes the case of performing both the normalizing and the annealing and the case of performing only the annealing.

The annealing is performed in order to remove stress, for example. The annealing is performed for three to four hours at a temperature of 550 to 600°C, for example. That is, the annealing is performed for three to four hours after the temperature of the cast metal reaches 550 to 600°C. The heating rate until reaching this temperature is preferred to be 80 to 120°C/h.

In the meantime, cooling is preferably performed down to a temperature of 250 to 350°C at a cooling rate of 20 to 30°C/h, for example. This cooling is performed by furnace cooling, for example. Then, the cast metal is cooled down to room temperature by natural cooling in the air. Incidentally, the above-described temperature is based on the temperature in the furnace similarly to the previously described normalizing.

The reason why the temperature of annealing is set to the above-described range is to suppress a reduction in strength caused by pearlite decomposition while appropriately removing stress. The reason why the cooling rate is set to 20 to 30°C/h is to uniformly cool the entire part.

By going through the above-described processes, the nodular graphite cast iron and the one-piece piston are fabricated.

Here, there will be explained a constitution of the one-piece piston fabricated of the nodular graphite cast iron according to the embodiment.

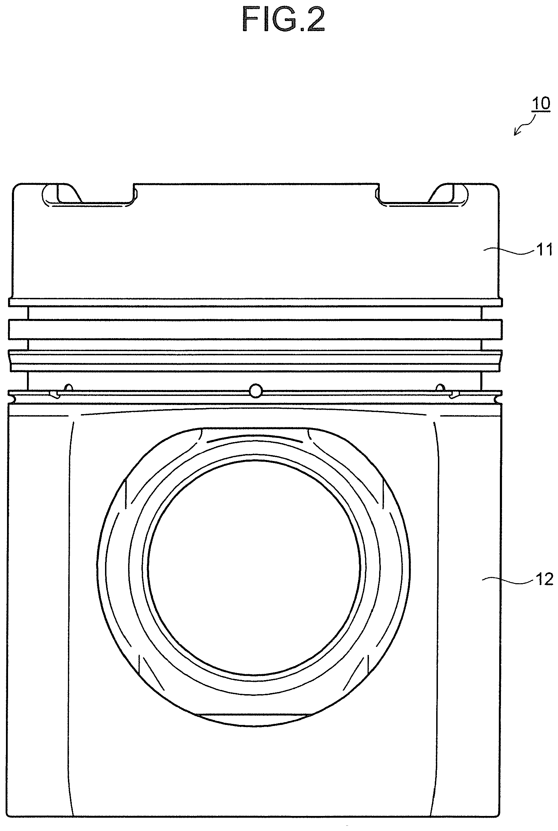

FIG. 2 is a side view of a one-piece piston 10 fabricated of the nodular graphite cast iron according to the embodiment. As illustrated in FIG. 2, the one-piece piston 10 has a crown 11 and a skirt 12 integrally formed. The crown 11 has a substantially cylindrical shape. The skirt 12 is formed to extend downward from the crown 11.

This one-piece piston 10 can be used as a piston of a marine engine, for example. As the marine engine, for example, a gas engine, a diesel engine, a dual fuel engine, and so on can be cited. As the marine engine, for example an engine having a bore diameter (cylinder diameter) of 150 mm to 350 mm and having 6 to 12 cylinders can be cited.

As above, the one-piece piston 10 fabricated of the nodular graphite cast iron according to the embodiment has excellent heat resistance and an excellent life. Therefore, the one-piece piston 10 becomes applicable to, for example, a marine engine with an increased heat load rather than to a conventional marine engine.

Next, there will be explained a constitution of a marine engine including the one-piece piston according to the embodiment. Incidentally, this one-piece piston is fabricated of the nodular graphite cast iron according to the embodiment. Here, there will be described one example where the one-piece piston is provided in a diesel engine.

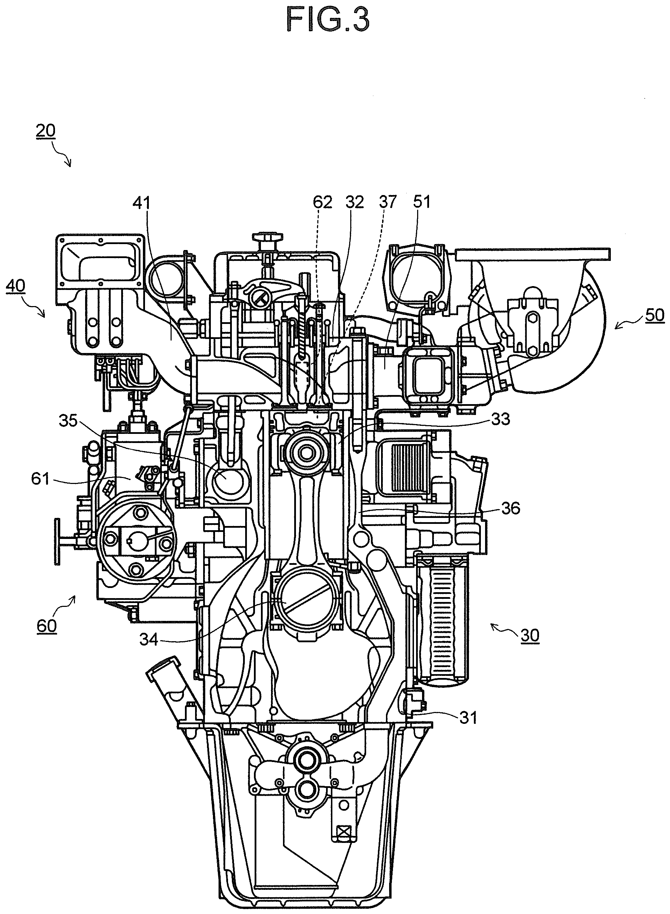

FIG. 3 is a view illustrating a constitution of a diesel engine 20 including a one-piece piston 33 according to an embodiment. As illustrated in FIG. 3, the diesel engine 20 includes a main body part 30, an intake path part 40, an exhaust path part 50, and a fuel supply part 60.

The main body part 30 converts thermal energy obtained by combusting a fuel into kinetic energy. Specifically, the main body part 30 converts the thermal energy obtained by combustion into rotation of a crankshaft 34. The main body part 30 includes a cylinder block 31, a cylinder head 32, the one-piece piston 33, the crankshaft 34, and a camshaft 35.

The cylinder block 31 includes a cylinder 36. The one-piece piston 33 is slidably housed in the cylinder 36. The cylinder head 32 is disposed to face the one-piece piston 33. Then, an operation chamber 37 is formed by the cylinder 36, the one-piece piston 33, and the cylinder head 32.

The operation chamber 37 is an inner space having a volume to change by sliding movement of the one-piece piston 33. Incidentally, the diesel engine 20 is a multicylinder engine having a plurality of the operation chambers 37 provided therein.

The one-piece piston 33 is coupled to the crankshaft 34 by a connecting rod. The crankshaft 34 rotates by sliding of the one-piece piston 33. Further, the crankshaft 34 rotates the camshaft 35 via a plurality of gears.

The intake path part 40 guides the air taken in from the outside to the operation chamber 37. The intake path part 40 includes a compressor wheel (not illustrated) and an intake manifold 41 along the air flowing direction. The intake manifold 41 guides the air compressed by the compressor wheel to the operation chamber 37.

The exhaust path part 50 guides the exhaust discharged from the operation chamber 37 to the outside. The exhaust path part 50 includes an exhaust manifold 51 and a turbine wheel (not illustrated) along the exhaust flowing direction. The exhaust manifold 51 guides the exhaust discharged from the operation chamber 37 to the turbine wheel.

The fuel supply part 60 guides a fuel supplied from a fuel tank to the operation chamber 37. The fuel supply part 60 includes a fuel injection pump 61 and a fuel injection nozzle 62 along the fuel flowing direction. The fuel injection pump 61 discharges the fuel pressurized by reciprocating movement of a plunger to the fuel injection nozzle 62. The fuel injection nozzle 62 injects the fuel into the operation chamber 37.

The one-piece piston 10 provided in such a marine engine has excellent heat resistance and an excellent life. Therefore, for example, an increase in heat load is enabled in the marine engine including the one-piece piston 10 rather than in the conventional marine engine.

Next, there will be explained an outline of a ship including the marine engine according to the embodiment. Incidentally, this marine engine includes the one-piece piston according to the embodiment.

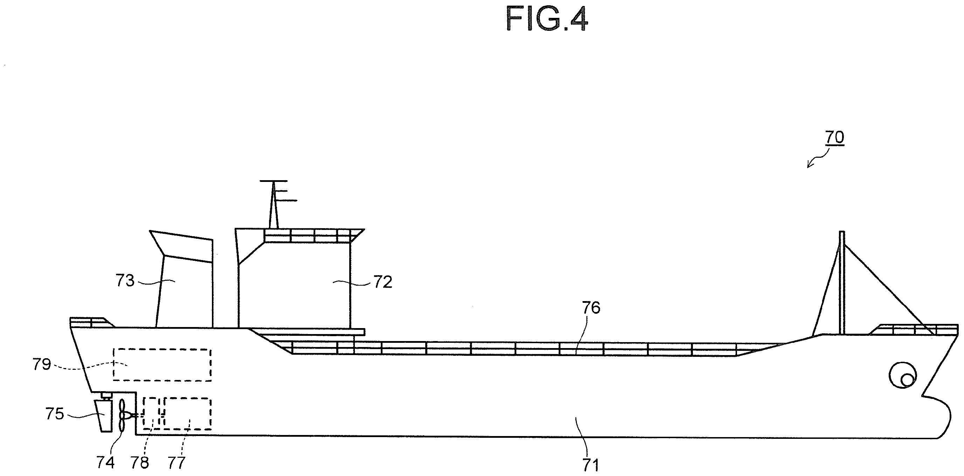

FIG. 4 is a side view of a ship 70 including the marine engine according to the embodiment. As illustrated in FIG. 4, the ship 70 includes a hull 71, a cabin 72, a funnel 73, a propeller 74, and a helm 75.

The cabin 72 is provided at a rear portion on a deck 76 in the hull 71. The funnel 73 is disposed rearward of the cabin 72. The propeller 74 and the helm 75 are provided at a rear lower portion of the hull 71.

At a rear portion inside the hull 71, a main engine 77 which are a driving source of the propeller 74 and a speed reducer 78 are provided. The propeller 74 is rotationally driven by rotary motive power from the main engine 77 through the speed reducer 78. Incidentally, the marine engine according to the embodiment functions as the main engine 77.

Further, at the rear portion inside the hull 71, a power generating device 79 for supplying power to an electrical system inside the ship 70 is disposed. When an engine is provided as the power generating device 79, the marine engine according to the embodiment may be applied as the engine for power generation.

The above-described nodular graphite cast iron according to the embodiment has excellent heat resistance and an excellent life while maintaining strength and hardness. The one-piece piston fabricated of this nodular graphite cast iron also has excellent heat resistance and an excellent life while maintaining strength and hardness. The marine engine including this one-piece piston has high reliability in terms of the heat resistance and the life of the piston.

(Evaluations of the spheroidizing ratio, the strength, the hardness, the heat resistance, the ratio of carbide, the life, and the ratio of pearlite)

Here, there will be explained the fact that the nodular graphite cast iron according to the embodiment has a spheroidizing ratio of 80% or more and can obtain excellent heat resistance and an excellent life.

Table 1 illustrates chemical compositions of Sample 1 to Sample 17 used for evaluations. Incidentally, Sample 1 to Sample 10 each are a nodular graphite cast iron falling within a chemical composition range of this embodiment. Sample 11 to Sample 17 each are a nodular graphite cast iron or a graphite cast iron having a chemical composition that does not fall within the chemical composition range of this embodiment, and are comparative examples. Further, Table 1 also illustrates the carbon equivalent (CE = C + 1/3 × Si).

**[Table 1] mass%**

| | C | Si | CE (C+1/3Si) | Mn | P | S | Mg | Cu | Cr | Mo | Fe |
|---|---|---|---|---|---|---|---|---|---|---|---|
| Sample 1 | 3.54 | 2.56 | 4.39 | 0.38 | 0.029 | 0.009 | 0.040 | 0.41 | 0.06 | 0.29 | balance |
| Sample 2 | 3.53 | 2.56 | 4.38 | 0.39 | 0.025 | 0.009 | 0.044 | 0.43 | 0.21 | 0.31 | balance |
| Sample 3 | 3.51 | 2.59 | 4.37 | 0.38 | 0.027 | 0.011 | 0.045 | 0.42 | 0.49 | 0.29 | balance |
| Sample 4 | 3.48 | 2.56 | 4.33 | 0.38 | 0.026 | 0.007 | 0.041 | 0.41 | 0.23 | 0.06 | balance |
| Sample 5 | 3.47 | 2.58 | 4.33 | 0.37 | 0.026 | 0.008 | 0.041 | 0.41 | 0.18 | 0.60 | balance |
| Sample 6 | 3.52 | 2.58 | 4.38 | 0.37 | 0.024 | 0.008 | 0.046 | 0.41 | 0.29 | 0.38 | balance |
| Sample 7 | 3.32 | 2.25 | 4.07 | 0.39 | 0.025 | 0.008 | 0.044 | 0.43 | 0.29 | 0.38 | balance |
| Sample 8 | 3.86 | 3.18 | 4.92 | 0.37 | 0.026 | 0.007 | 0.040 | 0.40 | 0.28 | 0.39 | balance |
| Sample 9 | 4.09 | 2.08 | 4.78 | 0.38 | 0.025 | 0.006 | 0.042 | 0.4 | 0.28 | 0.41 | balance |
| Sample 10 | 2.82 | 3.43 | 3.96 | 0.4 | 0.024 | 0.010 | 0.039 | 0.42 | 0.29 | 0.41 | balance |
| Sample 11 | 3.49 | 2.55 | 4.34 | 0.39 | 0.026 | 0.011 | 0.041 | 0.42 | 0.02 | 0.005 | balance |
| Sample 12 | 3.52 | 2.56 | 4.37 | 0.39 | 0.026 | 0.010 | 0.043 | 0.42 | 0.95 | 0.30 | balance |
| Sample 13 | 3.48 | 2.58 | 4.34 | 0.39 | 0.024 | 0.007 | 0.044 | 0.41 | 1.38 | 0.30 | balance |
| Sample 14 | 3.53 | 2.62 | 4.40 | 0.38 | 0.025 | 0.008 | 0.044 | 0.42 | 0.20 | 1.02 | balance |
| Sample 15 | 3.49 | 2.58 | 4.35 | 0.38 | 0.025 | 0.008 | 0.042 | 0.41 | 0.19 | 1.39 | balance |
| Sample 16 | 4.17 | 3.68 | 5.40 | 0.40 | 0.025 | 0.006 | 0.039 | 0.41 | 0.32 | 0.39 | balance |
| Sample 17 | 2.81 | 1.89 | 3.44 | 0.38 | 0.026 | 0.008 | 0.040 | 0.41 | 0.29 | 0.41 | balance |

The nodular graphite cast irons of Sample 1 to Sample 17 were each evaluated in terms of the spheroidizing ratio, the strength, the hardness, the heat resistance, the ratio of carbide, the life, and the ratio of pearlite. Incidentally, the ratio of carbide is the ratio of carbide in a base structure excluding a graphite structure. The ratio of pearlite is the ratio of pearlite structure in the base structure excluding the graphite structure.

The spheroidizing ratio was measured in conformity with JIS G5502.

The strength was evaluated by a tensile test. The tensile test was performed in conformity with JIS Z2241. Fracture elongation was calculated using an extensometer. As a test piece in the tensile test, a No. 14 A test piece in JIS Z2241 was used.

The hardness was evaluated by a Brinell hardness test. The Brinell hardness test was performed in conformity with JIS Z2243.

The heat resistance was evaluated by a creep test. The creep test was performed in conformity with JIS Z2271. In the creep test, a test temperature was set to 450°C and a load stress was set to 300 MPa. Then, a strain made after 25 hours elapsed since a stress was loaded was set as a creep strain. The creep strain was calculated using an extensometer. An R-type thermocouple was used for temperature measurement. As a test piece in the creep test, a No. 14 A test piece in JIS Z2241 was used.

A heat resistance improvement degree indicating the degree of improvement in heat resistance was obtained by dividing the creep strain in each of Samples by the creep strain in Sample 11 being a conventional nodular graphite cast iron (Creep strain in each of Samples/creep strain in Sample 11). Incidentally, as this heat resistance improvement degree is smaller, the heat resistance is more excellent.

The ratio of carbide and the ratio of pearlite were obtained by the previously described methods.

The life was evaluated by a high-temperature low-cycle fatigue test. The high-temperature low-cycle fatigue test was performed in conformity with JIS Z2279. In the high-temperature low-cycle fatigue test, a test temperature was set to 450°C. An R-type thermocouple was used for temperature measurement, and an extensometer was used for strain measurement. Then, a life ratio was calculated by dividing the result in each of Samples by the result in Sample 11 being the conventional nodular graphite cast iron. Incidentally, this life ratio indicates that as the life ratio is larger, the life is longer.

Test pieces used for these tests were fabricated as follows. In an electric furnace, a molten metal for forming a nodular graphite cast iron was formed. The temperature of the molten metal was maintained to 1520°C, and spheroidizing and inoculation were performed.

Then, the temperature of the molten metal was confirmed to be 1350 to 1380°C by an immersion thermometer, and the molten metal was poured into a mold formed of a sand mold. Then, at a cooling site, the poured metal in the mold was naturally cooled down to a temperature of 350°C or less.

After the cooling, a flask was removed and a cast metal was taken out from the mold. Sand was removed from the cast metal by shot peening.

Then, annealing was performed on each of the cast metals. The annealing was performed for 3.5 hours at a temperature of 570°C. Incidentally, the heating rate until reaching this temperature was set to 100°C/h. After 3.5 hours elapsed, each of the cast metals was cooled down to a temperature of 280°C at a cooling rate of 25°C/h by furnace cooling. Then, each of the cast metals was cooled down to room temperature by natural cooling in the air.

After the cooling, a round bar was cut out from each of the cast metals by a sawing machine, and the round bars were each worked into a test piece by lathing. In this manner, the test pieces were obtained.

Further, ones obtained by performing both normalizing and annealing on the cast metals related to Samples 1 to 10 were also fabricated. The normalizing was performed for 2.5 hours at a temperature of 900°C. Incidentally, the heating rate until reaching this temperature was set to 300°C/h. After 2.5 hours elapsed, each of the cast metals was cooled down to a temperature of 150°C at a cooling rate of 800°C/h by air cooling.

Then, the annealing was performed. The annealing was performed under the same condition as the condition described above. After cooling, the cast metals were each worked in the same manner as described above to obtain test pieces.

Test results in Samples are illustrated in Table 2 and Table 3. Table 2 illustrates results obtained when only the annealing was performed. Table 3 illustrates results obtained when the normalizing and the annealing were performed.

Here, with respect to the results illustrated in Table 2, the spheroidizing ratio is less than 80% in Sample 16 and Sample 17. Therefore, it is not possible for Sample 16 and Sample 17 to be referred to as the nodular graphite cast iron, and thus the evaluations other than measurement of the spheroidizing ratio are not performed. Further, in terms of the life, Sample 6 to Sample 10 and Sample 11 to Sample 15 were evaluated. Incidentally, the spheroidizing ratio and the ratio of carbide do not change depending on whether or not to perform the normalizing, and thus are not illustrated in Table 3.

**[Table 2]**

| | Spheroidizing Ratio, % | Tensile Strength, MPa | Brinell Hardness, HB | Heat Resistance Improvement Degree | Life Ratio | Ratio of Carbide, % | Ratio of Pearlite, % |
|---|---|---|---|---|---|---|---|
| Sample 1 | 87 | 674 | 207 | 0.24 | - | 0.1 | 64.7 |
| Sample 2 | 86 | 686 | 218 | 0.15 | - | 0.4 | 62.4 |
| Sample 3 | 93 | 675 | 238 | 0.16 | - | 1.5 | 67.3 |
| Sample 4 | 90 | 671 | 207 | 0.28 | - | 0.2 | 63.4 |
| Sample 5 | 93 | 686 | 225 | 0.14 | - | 0.9 | 65.2 |
| Sample 6 | 90 | 685 | 224 | 0.14 | 3.83 | 0.5 | 68 |
| Sample 7 | 89 | 652 | 233 | 0.21 | 3.34 | 1.2 | 68.8 |
| Sample 8 | 89 | 630 | 202 | 0.22 | 3.26 | 0.8 | 66.1 |
| Sample 9 | 88 | 645 | 222 | 0.25 | 3.50 | 1.0 | 66.3 |
| Sample 10 | 90 | 653 | 219 | 0.23 | 3.22 | 0.9 | 68.7 |
| Sample 11 | 91 | 631 | 204 | 1 | 1 | 0.0 | 63.9 |
| Sample 12 | 87 | 668 | 255 | 0.14 | 2.74 | 4.4 | 67.4 |
| Sample 13 | 85 | 641 | 259 | 0.16 | 2.60 | 4.9 | 70.3 |
| Sample 14 | 96 | 685 | 234 | 0.13 | 2.79 | 1.9 | 67.3 |
| Sample 15 | 94 | 672 | 240 | 0.11 | 2.68 | 2.2 | 69.7 |
| Sample 16 | 62 | - | - | - | - | - | - |
| Sample 17 | 47 | - | - | - | - | - | - |

**[Table 3]**

| | Tensile Strength, MPa | Brinell Hardness, HB | Heat Resistance Improvement Degree | Ratio of Pearlite, % |
|---|---|---|---|---|
| Sample 1 | 888 | 297 | 0.24 | 95.8 |
| Sample 2 | 891 | 305 | 0.11 | 93.9 |
| Sample 3 | 860 | 325 | 0.12 | 96.2 |
| Sample 4 | 884 | 297 | 0.33 | 95.2 |
| Sample 5 | 880 | 318 | 0.13 | 98.4 |
| Sample 6 | 895 | 308 | 0.13 | 97.6 |
| Sample 7 | 785 | 313 | 0.19 | 98.7 |
| Sample 8 | 836 | 294 | 0.15 | 94.1 |
| Sample 9 | 829 | 301 | 0.19 | 96.6 |
| Sample 10 | 809 | 305 | 0.18 | 97.3 |
| Sample 11 | 861 | 288 | 1.00 | 93.2 |

As illustrated in Table 2 and Table 3, Sample 1 to Sample 10 each have a spheroidizing ratio of 80% or more and have improved heat resistance while maintaining the tensile strength and the Brinell hardness equivalent to those of the conventional nodular graphite cast iron (Sample 11). Further, in Sample 1 to Sample 10, the ratio of carbide is 1.6% or less, and the ratio of pearlite exceeds 50%. Samples 7 and 9 are reference examples because each has a content ratio of Si not falling within the range of this embodiment.

Further, as illustrated in Table 2, the life ratio in each of Sample 6 to Sample 10 is equal to or more than three times the life ratio of the conventional nodular graphite cast iron (Sample 11). This is conceivably because the heat resistance improves and the ratio of carbide is suppressed to 1.6 or less in Sample 6 to Sample 10.

Incidentally, with respect to Sample 1 to Sample 5, data on the life ratio are not illustrated, but it is conceived that the life ratio comparable to the life ratio in Sample 6 to Sample 10 can be obtained because the heat resistance improves and the ratio of carbide is suppressed to 1.6 or less.

Further, as illustrated in Table 3, in Sample 1 to Sample 10, the tensile strength of 700 MPa or more is obtained. Incidentally, the life ratio was equal to or more than three times that of the conventional nodular graphite cast iron (Sample 11) even in the case when the normalizing and the annealing were performed, which is not illustrated in Table 3.

In the meantime, as illustrated in Table 2, in Sample 12 and Sample 13 each having the large Cr content and in Sample 14 and Sample 15 each having the large Mo content, the ratio of carbide to reduce toughness exceeds 1.6%. The life ratio in each of Sample 12 to Sample 15 is higher than that of the conventional nodular graphite cast iron (Sample 11), but is lower than that of each of Sample 6 to Sample 10. This is conceivably because the heat resistance improves but the ratio of carbide exceeds 1.6 in Sample 12 to Sample 15. That is, it is conceived that the life ratio in Sample 12 to Sample 15 is lower than that in Sample 6 to Sample 10 because the toughness reduces.

In Sample 16 and Sample 17 each having the content ratio of Si not falling within the range of this embodiment, the spheroidizing ratio is less than 80%.

As above, it is found out that Sample 1 to Sample 10 each have a spheroidizing ratio of 80% or more and can obtain excellent heat resistance and an excellent life.

## Claims

1. A nodular graphite cast iron for pistons, containing, in mass%, C: 2.7 to 4.3%, Si: 2.4 to 3.5%, Mn: 0.3 to 0.8%, Mg: 0.02 to 0.10%, Cu: 0.3 to 0.5%, Cr: 0.05 to 0.90%, and Mo: 0.05 to 1.00% with the balance being composed of Fe and inevitable impurities, wherein
the C content and the Si content fall within a composition range defined by a line sequentially joining respective points of point A (2.7%, 3.5%), point B (3.2%, 2.0%), point C (4.3%, 2.0%), and point D (3.8%, 3.5%) indicated by (the C content and the Si content) in a graph illustrating the relation between the C content and the Si content,
*wherein the nodular graphite cast iron for pistons is a pearlite-based nodular graphite cast iron that has a ratio of a pearlite structure greater than 50% in a base structure of the nodular graphite cast iron excluding a graphite structure,*
and wherein a graphite spheroidizing ratio in the nodular graphite cast iron is 80% or more, wherein the spheroidizing ratio is calculated in conformity with JIS G5502.

2. A nodular graphite cast iron for pistons according to Claim 1, containing, in mass%, Cr: 0.2 to 0.4%.

3. A nodular graphite cast iron for pistons according to Claim 1 or Claim 2, containing, in mass%, Mo: 0.3 to 0.5%.

4. A nodular graphite cast iron for pistons according to any preceding claim, wherein
among the inevitable impurities, in mass%, S is suppressed to 0.05% or less and P is suppressed to 0.1% or less.

5. A one-piece piston fabricated by using the nodular graphite cast iron for pistons according to any preceding claim.

6. A marine engine, comprising:
a one-piece piston fabricated by using the nodular graphite cast iron for pistons according to any of Claims 1 to 4.

## Patentansprüche

1. Kugelgraphitgusseisen für Kolben, enthaltend, in Massenprozent, C: 2,7 bis 4,3%, Si: 2,4 bis 3,5%, Mn: 0,3 bis 0,8%, Mg: 0,02 bis 0,10%, Cu: 0,3 bis 0,5% Cr: 0,05 bis 0,90% und Mo: 0,05 bis 1,00%, wobei der Rest aus Fe und unvermeidbaren Verunreinigungen zusammengesetzt ist, wobei
der C-Gehalt und der Si-Gehalt in einen Zusammensetzungsbereich fallen, der durch eine Linie definiert ist, die aufeinanderfolgend jeweils die Punkte von Punkt A (2,7%, 3,5%), Punkt B (3,2%, 2,0%), Punkt C (4,3%, 2,0%) und Punkt D (3,8%, 3,5%) verbindet, die (als der C-Gehalt und der Si-Gehalt) in einem Diagramm angegeben sind, das die Beziehung zwischen dem C-Gehalt und dem Si-Gehalt veranschaulicht,
wobei das Kugelgraphitgusseisen für Kolben ein Kugelgraphitgusseisen auf Perlitbasis ist, in dem der Anteil der Perlitstruktur in der Basisstruktur des Kugelgraphitgusseisens, das die Graphitstruktur ausschließt, 50% oder mehr beträgt,
und wobei der Kugelformanteil des Graphits im Kugelgraphitgusseisen 80% oder mehr beträgt, wobei der Kugelformanteil in Übereinstimmung mit JIS G5502 berechnet wird.

2. Kugelgraphitgusseisen für Kolben gemäß Anspruch 1, enthaltend, in Massenprozent, Cr: 0,2 bis 0,4%.

3. Kugelgraphitgusseisen für Kolben gemäß Anspruch 1 oder 2, enthaltend, in Massenprozent, Mo: 0,3 bis 0,5%.

4. Kugelgraphitgusseisen für Kolben gemäß einem der vorherigen Ansprüche, wobei unter den unvermeidbaren Verunreinigungen, in Massenprozent, S auf 0,05% oder weniger und P auf 0,1% oder weniger herabgesetzt sind.

5. Einteiliger Kolben, hergestellt unter Verwendung des Kugelgraphitgusseisens für Kolben gemäß einem der vorherigen Ansprüche.

6. Schiffsmotor, umfassend einen einteiligen Kolben, der unter Verwendung des Kugelgraphitgusseisens für Kolben gemäß einem der Ansprüche 1 bis 4 hergestellt ist.

## Revendications

1. Fonte à graphite nodulaire pour pistons, contenant, en % en masse, C : 2,7 à 4,3 %, Si : 2,4 à 3,5 %, Mn : 0,3 à 0,8 %, Mg : 0,02 à 0,10 %, Cu : 0,3 à 0,5 %, Cr : 0,05 à 0,90% et Mo : 0,05 à 1,00%, le reste étant composé de Fe et d'impuretés inévitables, dans laquelle
la teneur en C et la teneur en Si se situent dans une plage de composition définie par une ligne joignant séquentiellement des points respectifs du point A (2,7%, 3,5 %), du point B (3,2 %, 2,0 %), du point C (4,3 %, 2,0 %) et du point D (3,8 %, 3,5 %) indiquée par (la teneur en C et la teneur en Si) dans un graphique illustrant la relation entre la teneur en C et la teneur en Si,
dans laquelle la fonte à graphite nodulaire pour pistons est une fonte à graphite nodulaire à base de perlite qui a un taux d'une structure en perlite supérieur à 50% dans une structure de base de la fonte à graphite nodulaire excluant une structure en graphite,
et dans laquelle un taux de sphéroïdisation de graphite dans la fonte à graphite nodulaire est de 80% ou plus, dans lequel le taux de sphéroïdisation est calculé conformément à JIS G5502.

2. Fonte à graphite nodulaire pour pistons selon la revendication 1, contenant, en % en masse, Cr : 0,2 à 0,4 %.

3. Fonte à graphite nodulaire pour pistons selon la revendication 1 ou la revendication 2, contenant, en % en masse, Mo : 0,3 à 0,5 %.

4. Fonte à graphite nodulaire pour pistons selon l'une quelconque des revendications précédentes, dans laquelle
parmi les impuretés inévitables, en % en masse, S est supprimé jusqu'à 0,05 % ou moins et P est supprimé jusqu'à 0,1 % ou moins.

5. Piston monobloc fabriqué en utilisant la fonte à graphite nodulaire pour pistons selon l'une quelconque des revendications précédentes.

6. Moteur marin, comprenant :
un piston monobloc fabriqué en utilisant la fonte à graphite nodulaire pour pistons selon l'une quelconque des revendications 1 à 4.
